# EUROPÄISCHE PATENTSCHRIFT

(11) **EP 3 775 539 B1**
(45) Veröffentlichungstag und Bekanntmachung des Hinweises auf die Patenterteilung: **07.12.2022**
(21) Anmeldenummer: 19769848.3
(22) Anmeldetag: 29.05.2019
(51) Int. Cl.: F03D 13/25

(54) **SINGLE-POINT-MOORING-WINDENERGIEANLAGE**
SINGLE-POINT MOORING WIND TURBINE
ÉOLIENNE À SYSTÈME D'ANCRAGE À POINT UNIQUE

(30) Priorität: 20.07.2018 DE 102018117647
(43) Veröffentlichungstag der Anmeldung: 17.02.2021
(73) Patentinhaber: aerodyn consulting Singapore pte ltd, Singapore 188024 (SG)
(72) Erfinder: SIEGFRIEDSEN, Sönke, 24768 Rendsburg (DE)
(74) Vertreter: Lobemeier, Martin Landolf
(86) Internationale Anmeldenummer: PCT/IB2019/000458
(87) Internationale Veröffentlichungsnummer: WO 2020/016643

(56) Entgegenhaltungen:
- DE-B3-102013 111 115
- US-A1- 2012 093 648

## Beschreibung

Die Erfindung betrifft eine Single-Point-Mooring-Windenergieanlage mit einem auf einem Turm angeordneten Rotor. Insbesondere betrifft die Erfindung eine Single-Point-Mooring-Windenergieanlage mit einem schwimmenden Fundament, das wenigstens zwei in einer Ebene angeordnete Auftriebskörper aufweist.

Single-Point-Mooring-Windenergieanlagen sind insbesondere aus der US 2011 140 451 A1, EP 1 269 018 A1, DE 10 2013 111 115 B3, EP 3 019 740 B1 und der DE 10 2016 118 079 B3 bekannt. Diesen Anlagen ist insbesondere ein schwimmendes Fundament gemeinsam, das um nur einen einzigen Punkt drehbar gelagert ist, sodass aufgrund dieser besonderen Art der Verankerung auf gesonderte Einrichtungen zur Windrichtungsnachführung zwischen der Energiewandlungseinheit und dem Turmkopf verzichtet werden kann. Vielmehr erfolgt die Windrichtungsnachführung dieser als Lee-Läufer ausgebildeten Anlagen selbständig dadurch, dass sich die schwimmende Single-Point-Mooring-Windenergieanlage je nach Windrichtung um die Verankerung mit dem Wind ausrichtet. Analog zum als Schwojen bezeichneten Hin- und Herdrehen eines Schiffes an einer Ankerboje, kann die Selbstausrichtung der Anlage im Wind ebenfalls als Schwojen bezeichnet werden. Dabei erfolgt das Schwojen der schwimmenden Windenergieanlage um die Verankerung nahezu hauptsächlich aufgrund von Änderungen der Windrichtung - Strömungsrichtungsänderungen des Gewässers, in dem die Windenergieanlage verankert ist, spielen nur eine untergeordnete Rolle. Eine sich im Wind selbstausrichtende Ausgestaltung erlaubt es gemäß der EP 3 019 740 B1 bevorzugt auch, dass die am Rotor bzw. der Energiewandlungseinheit auftretenden Lasten direkt ohne am Turm auftretende Biegemomente in das Fundament und von dort direkt in die Verankerung und somit in den Boden des Gewässers, in dem die schwimmende Windenergieanlage verankert ist, eingeleitet werden.

Der grundsätzliche Vorteil solcher Anlagen gegenüber mehrfach verankerter und damit im Wesentlichen drehfester Anlagen mit einem (aktiven) Windnachführungssystem am Turmkopf besteht darin, dass die Single-Point-Mooring-Windenergieanlagen aufgrund des fehlenden Yaw-Systems zwischen Turm und Gondel mit einem signifikant geringeren Kopfgewicht ausgebildet werden können, wodurch sich wiederum der konstruktive Aufwand für das den Turm mit dem Rotor tragende schwimmende Fundament verringert.

Der Erfinder der vorliegenden Anmeldung ist während der Forschungs- und Entwicklungsarbeiten von Single-Point-Mooring-Windenergieanlagen darauf aufmerksam geworden, dass derartige Anlagen im Betrieb dazu tendieren, sich aufgrund des Drehmomentes des Rotors in Drehrichtung des Rotors zur Seite zu krängen. Bei großen Offshore-Anlagen liegt dieser Neigungswinkel α in der Größenordnung von 2° bis voraussichtlich 7°.

Die Neigung der Single-Point-Mooring-Windenergieanlage wiederum führt dazu, dass in Draufsicht auf die Single-Point-Mooring-Windenergieanlage die gedachte Linie zwischen dem Ankerpunkt (also dem Drehpunkt) der Single-Point-Mooring-Windenergieanlage und der Achse des Rotors der sich zu einer Seite krängenden Anlage nicht länger mit der Windrichtung identisch ist, sodass sich ein Drehmoment um den Ankerpunkt ausbildet und sich die gesamte Anlage aus der Windrichtung herausdreht. Bei einer in Windrichtung gesehenen Drehrichtung im Uhrzeigersinn kommt es also zunächst zu einem Kippen (Krängen) der Anlage nach rechts und einem anschließenden Drehen der gesamten Anlage von oben gesehen nach links. Die daraus resultierende Abweichung der Rotorachse von der Windrichtung erreicht dabei Werte zwischen ca. 20° und ca. 40°, sodass durch die Rotordrehmoment-bedingte Windrichtungsabweichung mit (inakzeptablen) Energieverlusten von bis zu 25-30 % zu rechnen ist.

Im Sinne dieser Patentanmeldung wird als Ankerpunkt der Drehpunkt der Single-Point-Mooring-Anlage bezeichnet.

Das Schwojen einer schwimmenden Single-Point-Mooring-Windenergieanlage in Betrieb weist also neben dem von Strömungsänderungen des Gewässers bedingten zu vernachlässigenden Anteil und einem zur Aufrechterhaltung des Betriebs der Anlage gewünschten durch Windrichtungsänderungen hervorgerufenen Anteil auch einen sich auf die Effizienz der Anlage negativ auswirkenden durch das Rotordrehmoment ausgeübten Anteil auf. Anders ausgedrückt ist das Schwojen einer schwimmenden Single-Point-Mooring-Windenergieanlage das Resultat der aus dem Wind, der Strömung und der Rotation des Rotors auf die Anlage wirkenden Kräfte und Momente.

Dieser Zusammenhang wird im Folgenden anhand von Zeichnungen näher erläutert. Dabei zeigen:
- Fig. 1: (a) eine schematische Frontalansicht in Windrichtung einer schwimmenden Windenergieanlage in einem drehmomentfreien Zustand und (b) eine Draufsicht auf die schwimmende Windenergieanlage in einem drehmomentfreien Zustand; und
- Fig. 2: (a) eine schematische Frontalansicht in Windrichtung der schwimmenden Windenergieanlage aus Fig. 1 im Betriebszustand mit Rotordrehmoment und (b) eine schematische Draufsicht auf die schwimmende Windenergieanlage aus Fig. 1 im Betriebszustand mit Rotordrehmoment.

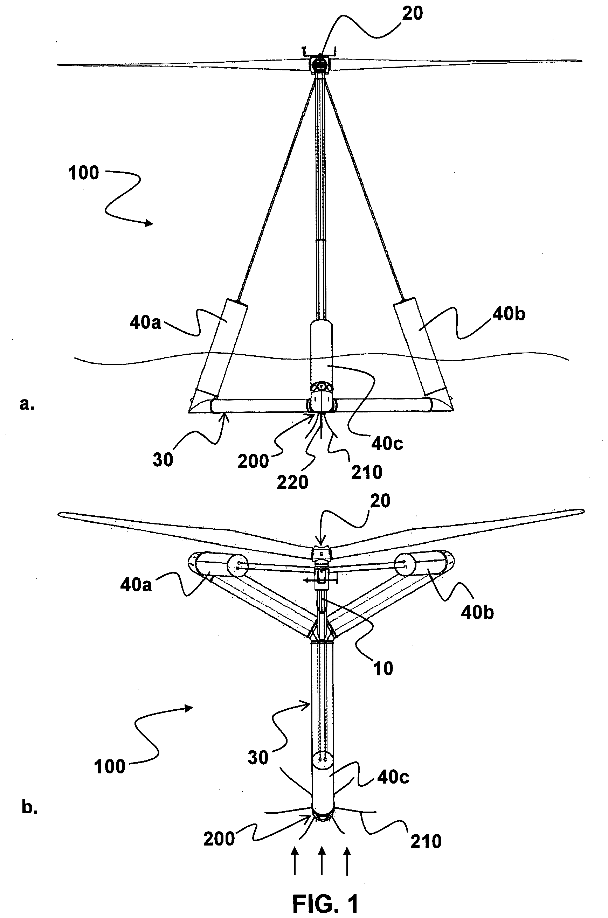

Fig. 1a zeigt eine schematische Frontalansicht in Windrichtung einer besonders bevorzugten schwimmenden Windenergieanlage 100 nach dem Stand der Technik, wobei dieselbe Anlage 100 in Fig. 1b nochmals in Draufsicht dargestellt ist. Die Anlage 100 ist als Single-Point-Mooring-Windenergieanlage 100 ausgebildet, wobei sich der Anker-bzw. Drehpunkt 200 der Anlage 100 - wie aus der DE 10 2016 118 079 B3 bekannt - am freien Ende des langen Arms des schwimmenden Fundaments der schwimmenden Windenergieanlage 100 befindet. Zu erkennen sind ebenfalls die die Windenergieanlage 100 am Boden des Gewässers verankernden Ankerleinen 210 und das die Windenergieanlage mit dem Stromnetz verbindende Seekabel 220.

Die Windenergieanlage 100 ist im gezeigten Beispiel nicht in Betrieb und, wie Fig. 1 zeigt, derart getrimmt, dass das schwimmende Fundament im Wesentlichen horizontal ausgerichtet ist, sodass der Turm der Windenergieanlage 100 mit dem Ankerpunkt 200 exakt in Windrichtung (vgl. Pfeile) ausgerichtet ist.

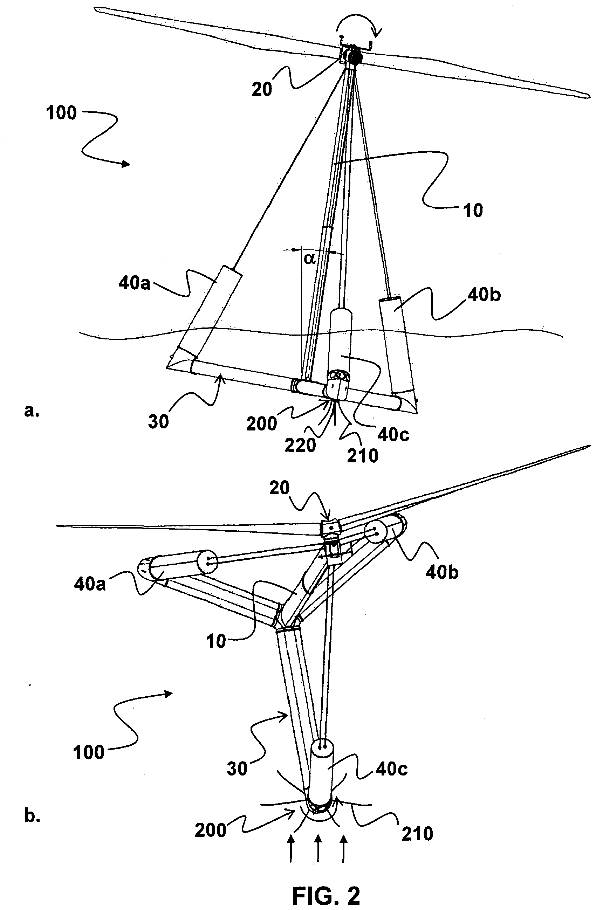

Befindet sich die Single-Point-Mooring-Windenergieanlage 100 jedoch in Betrieb mit Drehmomenterzeugung, ist zu beobachten, dass die Anlage 100 in Drehrichtung des Rotors um einen Winkel α krängt und in die der Drehrichtung entgegengesetzte Richtung um den Drehpunkt 200 der Anlage 100, also die Verankerung der Anlage 100, bei unveränderter Windrichtung (und Strömungsrichtung) aus dem Wind schwojet. Durch das Rotordrehmoment-bedingte Schwojen nimmt eine Single-Point-Mooring-Windenergieanlage 100 entgegen der allgemeinen Annahme bei gegenüber Fig. 1 unveränderter Windrichtung in Betrieb tatsächlich die in Fig. 2 dargestellte Position ein. Dass dieses durch das Rotordrehmoment bewirkte Schwojen der Windenergieanlage Energieleistungsverluste mit sich bringt, ist offenbar.

Dieses Phänomen der Drehmoment-Yaw-Kopplung tritt also konstruktionsbedingt ausschließlich bei schwimmenden Windenergieanlagen mit einer "Single-Point-Mooring"-Verankerung auf, bei der sich die komplette Anlage, bevorzugt über eine Drehverbindung am oder im Fundament, insgesamt im Wasser ohne federnde Rückstellkräfte und nur mit Wasserdämpfung im Wasser drehen kann.

Aufgabe der Erfindung ist es daher, eine besonders effiziente Single-Point-Mooring-Windenergieanlage zu schaffen.

Diese Aufgabe wird durch die Single-Point-Mooring-Windenergieanlage mit den Merkmalen von Anspruch 1 gelöst. Ebenso wird diese Aufgabe durch das Verfahren zur Inbetriebnahme einer an einem Ankerpunkt verankerten, um diesen frei drehbaren Single-Point-Mooring-Windenergieanlage mit den Merkmalen von Anspruch 9 gelöst. Die Unteransprüche geben jeweils vorteilhafte Ausgestaltungen der Erfindung wieder.

Der Grundgedanke der Erfindung besteht darin, die Anlage so auszugestalten, dass aufgrund den Aufbau der Single-Point-Mooring-Windenergieanlage betreffender konstruktiver Maßnahmen oder dem Vorsehen bestimmter zusätzlicher Einrichtungen dem durch das Rotordrehmoment bewirkten Schwojen der Windenergieanlage um den Ankerpunkt entgegengewirkt wird.

Dieses kann erfindungsgemäß einerseits konstruktiv dadurch erreicht werden, dass die Single-Point-Mooring-Windenergieanlage oder Teile davon ohne vom drehenden Rotor bewirktes Drehmoment, also außer Betrieb der Anlage, von vornherein eine erste Position einnehmen, die im Betrieb der Anlage vom Rotordrehmoment bewirkt zur Einnahme einer zweiten Position führen, in der der Ankerpunkt/Drehpunkt und der Rotor, insbesondere die Rotorachse, in Draufsicht auf die Anlage auf einer Linie mit der Windrichtung und entsprechend dem Rotorschub liegen. Dadurch, dass die ansonsten durch das Rotordrehmoment bewirkte Krängung der Anlage im Betrieb durch die konstruktiv bewirkte Krängung der Anlage außer Betrieb kompensiert wird, kann das Schwojen der Single-Point-Mooring-Windenergieanlage um den Ankerpunkt abweichend von der Windrichtung vermieden oder weitgehend vermindert werden.

So kann - bezogen auf das Nenndrehmoment des Rotors - bevorzugt vorgesehen sein, dass der Turm der Anlage entgegen der Rotordrehrichtung um einen vorbestimmten Neigungswinkel vorgeneigt ist, wobei der Turm erst bei Entstehen des vom Rotor bewirkten Drehmoments derart aufgerichtet wird, dass der Ankerpunkt und der Rotor, insbesondere die Rotorachse, in Draufsicht auf die Anlage auf einer Linie mit der Windrichtung liegen.

Insbesondere ist die Anlage also derart auszulegen, dass der vom Turm im betriebslosen Zustand der Anlage eingenommene Neigungswinkel entgegen der Drehrichtung des Rotors einen Betrag aufweist, der dem Neigungswinkel entspricht, den sich die Anlage im Betrieb bei Aufbringen des vom Rotor bewirkten (Nenn-) Drehmoments in Drehrichtung des Rotors neigt. Durch diese Ausgestaltung wird die Auswirkung des vom Rotor bewirkten Drehmoments auf die Positionierung der Anlage um den Ankerpunkt kompensiert, sodass Leistungsverluste vermieden werden.

Nach einer anderen Ausgestaltung ist es bei Single-Point-Mooring-Windenergieanlage mit wenigstens zwei beidseits des Rotors angeordneten Auftriebskörpern auch möglich, dem entgegen der Drehrichtung des Rotors angeordneten Auftriebskörper bevorzugt ein größeres Gewicht zu verleihen als dem in Drehrichtung des Rotors angeordneten Auftriebskörper. Andersherum ist es bevorzugt denkbar, dem in Drehrichtung des Rotors angeordneten Auftriebskörper einen größeren Auftrieb zu verleihen als dem entgegen der Drehrichtung des Rotors angeordneten Auftriebskörper. Derselbe gewünscht Effekt kann auch durch eine Kombination der beiden Vorgehensweisen erreicht werden.

Zu diesen allgemeinen konstruktiven Maßnahmen ist erfindungsgemäß alternativ (oder auch zusätzlich) vorgesehen, dass die Single-Point-Mooring-Windenergieanlage eine dem Drehmoment des Rotors direkt funktionell entgegenwirkende Einrichtung aufweist. Die Einrichtung weist insbesondere einen Antrieb auf oder ist als Antrieb ausgestaltet, der einen dem durch das Rotordrehmoment bewirkten Schwojen entgegenwirkenden Schub erzeugt und die gesamte Anlage entgegen dem vom Rotordrehmoment bedingten Schwojen um den Ankerpunkt dreht. Als Antrieb kann beispielsweise ein Schiffsmotor und/oder eine Querstrahlsteueranlage verwendet werden.

Erfindungsgemäß wird also eine Single-Point-Mooring-Windenergieanlage mit einem auf einem Turm angeordneten Rotor vorgeschlagen, mit einer dem durch das Rotordrehmoment bewirkten Schwojen der Windenergieanlage entgegenwirkenden Ausgestaltung.

Nach einer bevorzugten Ausgestaltung der Erfindung ist insbesondere eine dem durch das Rotordrehmoment bewirkten Schwojen der Windenergieanlage entgegenwirkende Einrichtung vorgesehen.

Dabei weist die erfindungsgemäß ausgestaltete bzw. eingerichtete Windenergieanlage ein schwimmendes Fundament mit wenigstens zwei in einer Ebene angeordneten Auftriebskörpern auf.

Nach einer ersten bevorzugten Ausgestaltung ist der Turm zur Kompensation des durch das Rotordrehmoment bewirkten Schwojens der Windenergieanlage entgegen der Drehrichtung des Rotors geneigt.

Besonders bevorzugt ist der Turm gegenüber dem Fundament geneigt.

Dabei beträgt der Neigungswinkel β des Turms gegenüber der Horizontalen höchst bevorzugt etwa 2° ≤ β ≤ 7°.

Nach einer zweiten bevorzugten Ausgestaltung weist die Anlage auf der der Drehrichtung des Rotors entgegengesetzten Seite ein zusätzliches, das Nenndrehmoment des Rotors wenigstens teilweise kompensierendes Gewicht auf.

Derselbe Effekt wird auch durch eine alternative bevorzugte Ausgestaltung erreicht, bei der der in Drehrichtung des Rotors angeordnete Auftriebskörper einen größeren Auftrieb besitzt als der der Drehrichtung entgegengesetzt angeordnete Auftriebskörper.

Die Erfindung eignet sich insbesondere für eine gemäß der EP 3 019 740 B1 ausgestaltete Windenergieanlage, bei der ein schwimmendes Fundament mit wenigstens drei in einer Ebene angeordneten Auftriebskörpern vorgesehen, der Turmfuß einem der Auftriebskörper benachbart angeordnet und der Rotor zwischen den anderen beiden Auftriebskörpern angeordnet ist und wobei der Abstand des in Drehrichtung angeordneten Auftriebskörpers zum Rotor größer ist als der Abstand des der Drehrichtung entgegengesetzt angeordneten Auftriebskörpers zum Rotor. Alternativ kann der Abstand des entgegen der Drehrichtung angeordneten Auftriebskörpers zum Rotor geringer sein als der entsprechende Abstand des in Drehrichtung des Rotors angeordnete Auftriebskörper zum Rotor.

Schließlich wird eine Windenergieanlage vorgeschlagen, bei der die Einrichtung einen das Schwojen wenigstens teilweise kompensierenden Antrieb, insbesondere einen Schiffsmotor oder eine Querstrahlsteueranlage aufweist.

Die Ausgestaltung einer erfindungsgemäßen Anlage muss nicht nur ein einziges dem Rotordrehmoment entgegenwirkendes Ausgestaltungsmerkmal aufweisen, sondern kann die vorgenannten Ausführungen auch in (Teil-)Kombinationen in einer einzigen Anlage vereinen.

Zur Errichtung und Inbetriebnahme einer an einem Ankerpunkt verankerten, um diesen frei drehbaren Single-Point-Mooring-Windenergieanlage mit einem auf einem Turm angeordneten Rotor wird erfindungsgemäß vorgeschlagen, die Anlage im betriebslosen Zustand zum Ausgleich des vom Rotor im Betrieb erzeugten Drehmoments derart (insbesondere im Hinblick auf das Nenndrehmoment des Rotors) zu trimmen, dass in Draufsicht auf die Single-Point-Mooring-Windenergieanlage die gedachte Linie zwischen dem Ankerpunkt und der Rotorachse im Betriebszustand der Single-Point-Mooring-Windenergieanlage identisch mit der Windrichtung ist.

Dabei wird die Windrichtung bevorzugt die zeitlich und/oder im Bereich der Single-Point-Mooring-Windenergieanlage lokale mittlere Windrichtung definiert.

Das Trimmen erfolgt weiter bevorzugt mittels Füllen und/oder Entleeren von in oder an der Single-Point-Mooring-Windenergieanlage vorgesehener Ballastwassertanks mit Ballastwasser. Alternativ oder zusätzlich kann das Trimmen der Anlage auch mittels Anbringen und/oder Entfernen von Gewichten erfolgen.

Die Erfindung wird anhand eines in den beigefügten Zeichnungen dargestellten besonders bevorzugt ausgestalteten Ausführungsbeispiels näher erläutert. Es zeigen:

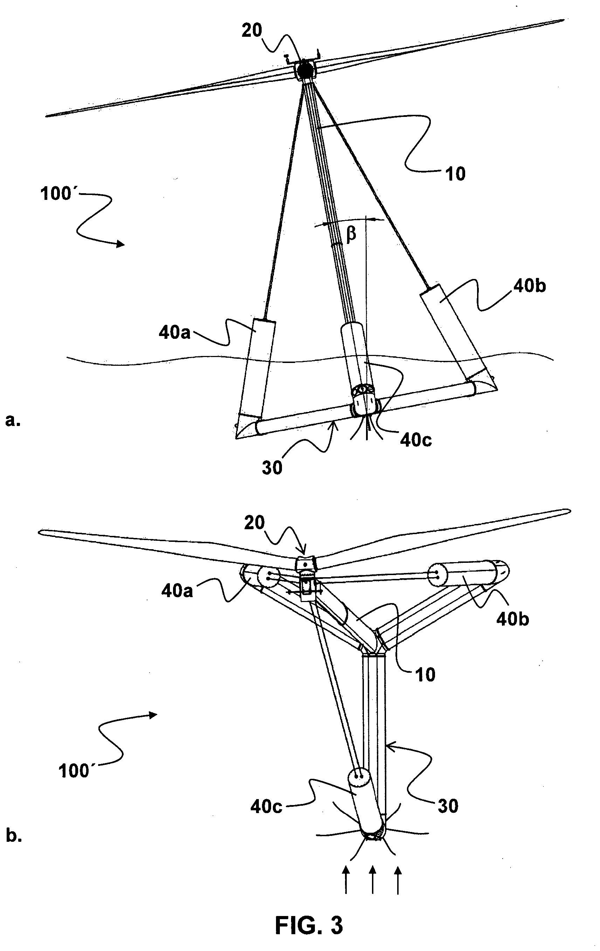

- Fig. 3: (a) eine schematische Frontalansicht in Windrichtung einer schwimmenden Windenergieanlage nach einem ersten Ausführungsbeispiel mit der erfindungsgemäßen Ausführung in einem drehmomentfreien Zustand und (b) eine schematische Draufsicht auf diese schwimmende Windenergieanlage;

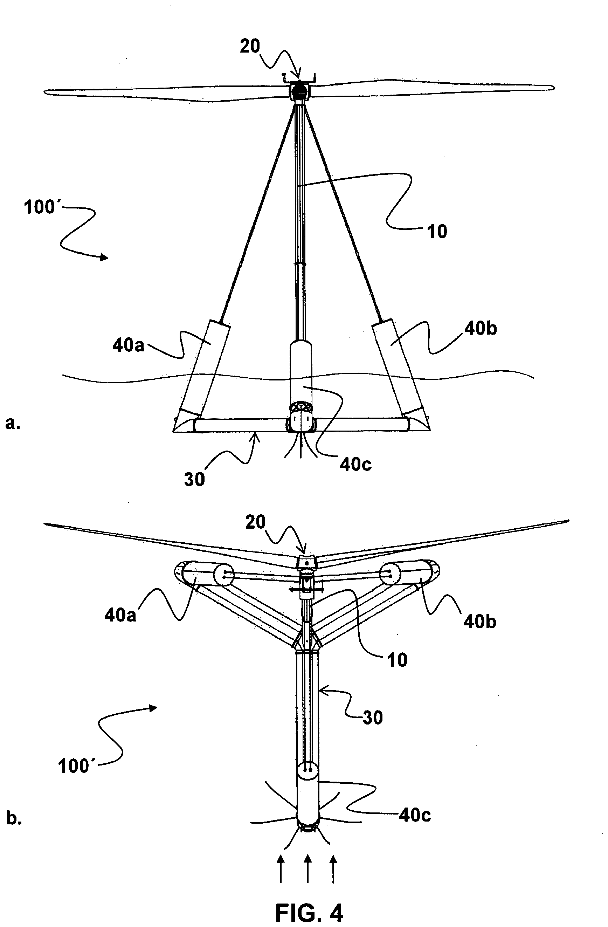

- Fig. 4: (a) eine schematische Frontalansicht der schwimmenden Windenergieanlage aus Fig. 3 im Betriebszustand mit Rotordrehmoment und (b) eine schematische Draufsicht dieser schwimmenden Windenergieanlage mit der erfindungsgemäßen Ausführung im Betriebszustand mit Rotordrehmoment;

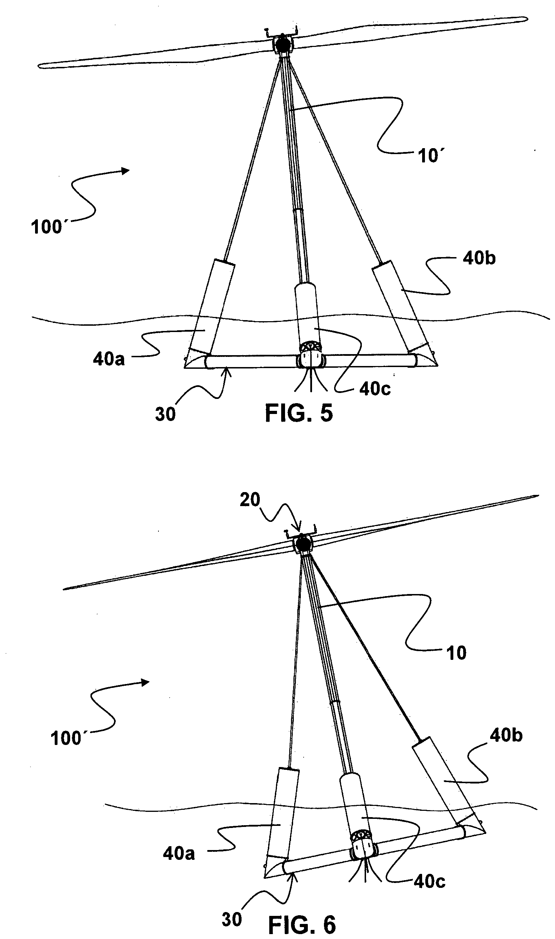

- Fig. 5: eine gemäß eines besonders bevorzugt ausgestalteten zweiten Ausführungsbeispiels ausgeführte Konstruktion mit einem im Winkelversatz aufgesetzten Turm auf das Fundament;
- Fig. 6: eine Struktur einer schwimmenden Windenergieanlage gemäß eines dritten Ausführungsbeispiels mit unterschiedlichen Abständen der zur Symmetrieachse angeordneten Schwimmer;

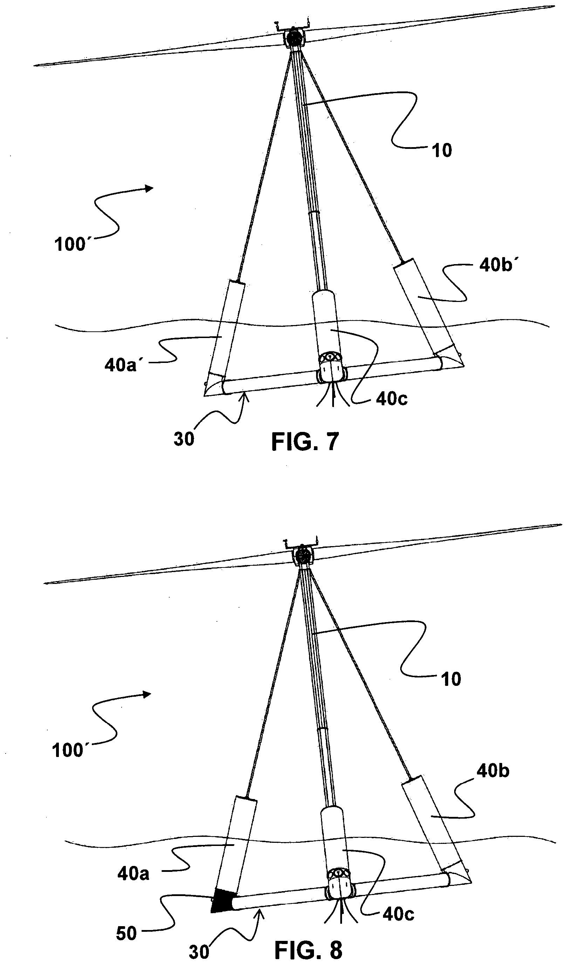

- Fig. 7: eine Struktur einer schwimmenden Windenergieanlage gemäß eines vierten Ausführungsbeispiels mit unterschiedlichen Wasserlinienflächen der zur Symmetrieachse angeordneten Schwimmer; und
- Fig. 8: eine Struktur einer schwimmenden Windenergieanlage gemäß dem ersten Ausführungsbeispiel, mit der die erforderliche Schiefstellung durch Anbringen eines Zusatzgewichts erzeugt wird.

Fig. 3a zeigt eine schematische Frontalansicht einer in Windrichtung ausgerichteten schwimmenden Single-Point-Mooring-Windenergieanlage nach einem ersten Ausführungsbeispiel in einem drehmomentfreien Zustand, wobei Fig. 3b eine schematische Draufsicht auf die schwimmende Windenergieanlage Single-Point-Mooring-Windenergieanlage darstellt.

Die in Fig. 3 gezeigte Single-Point-Mooring-Windenergieanlage 100' ist konstruktiv im Wesentlichen mit der aus der bekannten schwimmenden Windenergieanlage identisch. Die Single-Point-Mooring-Windenergieanlage 100' weist einen auf einem Turm 10 angeordneten Rotor 20 auf, wobei der Turm 10 auf einem Fundament 30 angeordnet ist, das über drei Auftriebskörper 40a, 40b, 40c verfügt. Das Fundament 30 ist Y-förmig ausgebildet, wobei sich jeweils ein Auftriebskörper 40a, 40b, 40c jeweils am freien Ende eines Arms der Y-förmigen Fundamentstruktur befindet. Der lange, den Auftriebskörper 40c tragende Arm bildet dabei die Symmetrieachse der Single-Point-Mooring-Windenergieanlage 100', wobei der Turm 10 in der Symmetrieachse angeordnet und nach Lee geneigt ist.

Nicht bekannt und erfindungsgemäß vorgesehen ist hingegen, dass die Single-Point-Mooring-Windenergieanlage 100' spätestens nach dem Verbinden mit dem Ankerpunkt 200, in jedem Fall aber vor der Inbetriebnahme derart getrimmt wird, dass der Turm 10 um einen vorbestimmten Neigungswinkel β entgegen der Drehrichtung des Rotors 20 geneigt wird, sodass die Single-Point-Mooring-Windenergieanlage 100' um etwa 5° krängt.

Wie Fig. 3b in Draufsicht auf die Single-Point-Mooring-Windenergieanlage 100'deutlich zeigt, liegt die Rotorachse damit deutlich außerhalb der vom langen Arm des Fundaments 30 gebildeten Symmetrieachse der Anlage.

Wird die Single-Point-Mooring-Windenergieanlage 100'jedoch in Betrieb genommen, richtet sich die Anlage aufgrund des vom Rotor 20 ausgebildeten Drehmoments um den zuvor bestimmten Neigungswinkel auf, sodass - wie Fig. 4a und Fig. 4b deutlich zeigen - in Draufsicht auf die Single-Point-Mooring-Windenergieanlage 100' die gedachte Linie zwischen dem Ankerpunkt 200 und der Rotorachse im Betriebszustand der Single-Point-Mooring-Windenergieanlage 100' identisch mit der Windrichtung ist.

Das Krängen der Anlage im betriebslosen Zustand mit einem vorbestimmten, dem Nenndrehmoment des Rotors 20 entgegenwirkenden Neigungswinkel β kann unterschiedlich bewirkt werden:
Einerseits kann - wie in Fig. 8 dargestellt - der in Bezug auf die Symmetrieachse der Drehrichtung des Rotors entgegengesetzte Anteil der Single-Point-Mooring-Windenergieanlage 100', insbesondere das Fundament 30 oder der Auftriebskörper 40a, mit einem höheren Gewicht ausgebildet sein als der Anteil der Single-Point-Mooring-Windenergieanlage 100' in Drehrichtung. Insbesondere zeigt Fig. 8, dass die erforderliche Schiefstellung gemessen an der im Betrieb gedachten Achse Drehpunkt-Rotor durch Anbringen eines zusätzlichen Gewichts auf der Seite der Windenergieanlage, die der Drehrichtung des Rotors gegenüberliegt, erzeugt werden kann - beispielsweise durch Vorsehen eines am freien Ende des den Auftriebskörpers 40a tragenden Arms, insbesondere unterhalb des Auftriebskörpers 40a angeordneten zusätzlichen Gewichts 50.

Schließlich zeigt Fig. 8 eine Struktur einer schwimmenden Windenergieanlage 100'gemäß dem ersten Ausführungsbeispiel, bei dem - wie zuvor dargestellt - die erforderliche Schiefstellung gemessen an der im Betrieb gedachten Achse Drehpunkt-Rotor durch Anbringen eines zusätzlichen Gewichts auf der Seite der Windenergieanlage, die der Drehrichtung des Rotors gegenüberliegt, erzeugt wird.

Andererseits kann der im betriebslosen Zustand der Anlage 100'eingenommene Neigungswinkel auch durch Trimmen der Anlage 100'aufgrund der Verteilung von Ballastwasser im Fundament 30 und/oder den Auftriebskörpern 40a, 40b erreicht werden.

Eine alternative Lösung ist in Fig. 5 dargestellt, in der der Turm 10 der Single-Point-Mooring-Windenergieanlage 100' auf das bekannte Y-förmige Fundament 30 von vornherein in Richtung des der Drehrichtung des Rotors 20 entgegengesetzten Auftriebskörpers 40a geneigt ist. Der Turm 10 ist also gegenüber dem Fundament 30 um einen vorbestimmten Betrag geneigt, der demjenigen Winkel α entspricht, den die Anlage 100' im Betrieb bei vom Rotor 20 aufgebrachten Drehmoment insgesamt kippt.

Fig. 6 zeigt eine Struktur einer schwimmenden Windenergieanlage 100' gemäß einem dritten Ausführungsbeispiel mit unterschiedlichen Abständen zur gedachten Achse Rotor-Ankerpunkt angeordneten Auftriebskörpern 40a ,40b.

Bei etwas genauerer Betrachtung ist zu erkennen, dass der Abstand des in Windrichtung angeordneten rechten Auftriebskörpers 40 zur Achse, in der der Turm 10 in Windrichtung geneigt ist, größer ist als der Abstand des in Windrichtung angeordneten linken Auftriebskörpers 40a. Die Auftriebskörper 40a, 40b sind im Übrigen identisch ausgebildet. Durch den durch den größeren Wirkabstand des in Drehrichtung des Rotors 20 angeordneten Auftriebskörpers zur vorgenannten Achse entsteht ein Hebel, der so ausgelegt ist, dass dieser dem Rotordrehmoment entgegenwirkt, der ansonsten ein Krängen der Anlage 100 bewirken würde.

Fig. 7 zeigt eine Struktur einer schwimmenden Windenergieanlage 100' gemäß einem vierten Ausführungsbeispiel mit unterschiedlichen Wasserlinienflächen der zur Symmetrieachse der Windenergieanlage angeordneten Auftriebskörper 40a, 40b, 40c.

Dabei ist zu erkennen, dass der in Rotordrehrichtung angeordnete Schwimmkörper 40b'- wie gezeigt - so ausgebildet ist, dass dieser einen größeren Auftrieb erzeugt als der in der entgegen der Rotordrehrichtung angeordnete Schwimmkörper 40a'. Dabei kann der zuletzt genannte Schwimmkörper 40a' denselben Auftrieb erzeugen, wie der am Drehpunkt der Anlage 100'angeordnete Schwimmkörper 40c oder der in Rotordrehrichtung angeordnete Schwimmkörper 40b'erzeugt denselben Auftrieb wie der am Drehpunkt der Anlage 100' angeordnete Schwimmkörper 40c, wobei lediglich der Auftrieb des entgegen der Rotordrehrichtung angeordnete Schwimmkörpers 40a' vermindert ist.

Wesentlich ist nur, dass die Anlage 100' so getrimmt ist, dass die Anlage 100'im Betrieb im Wesentlichen horizontal ausgerichtet ist und die gedachte Linie Drehpunkt-Rotor mit der Windrichtung identisch ist.

## Patentansprüche

1. Single-Point-Mooring-Windenergieanlage (100') mit einem auf einem Turm (10) angeordneten Rotor (20), wobei die Windenergieanlage ein schwimmendes Fundament (30) mit wenigstens zwei in einer Ebene angeordneten Auftriebskörpern (40a, 40b, 40c) aufweist,
**gekennzeichnet durch**
eine dem durch das Rotordrehmoment bewirkten Schwojen der Windenergieanlage (100) entgegenwirkende Ausgestaltung, wobei:
- der Turm (10) gegenüber dem Fundament (30) entgegen der Drehrichtung des Rotors (20) geneigt ist; oder
- die Windenergieanlage (100') auf der der Drehrichtung des Rotors (20) entgegengesetzten Seite ein das Nenndrehmoment des Rotors wenigstens teilweise kompensierendes Gewicht (50) aufweist; oder
- der in Drehrichtung des Rotors (20) angeordnete Auftriebskörper (40b) einen größeren Auftrieb besitzt als der der Drehrichtung entgegengesetzt angeordnete Auftriebskörper (40a).

2. Windenergieanlage (100') nach Anspruch 1, **dadurch gekennzeichnet, dass** der Turm (10) in einem Winkel von 2° ≤ β ≤ 7° geneigt ist.

3. Verfahren zur Inbetriebnahme einer an einem Ankerpunkt (200) verankerten, um diesen frei drehbaren Single-Point-Mooring-Windenergieanlage (100') mit einem auf einem Turm (10) angeordneten Rotor (20), **gekennzeichnet durch** den Schritt:
- Trimmen der Anlage (100') im betriebslosen Zustand zum Ausgleich des vom Rotor (20) im Betrieb erzeugten Drehmoments derart, dass in Draufsicht auf die Single-Point-Mooring-Windenergieanlage (100') die gedachte Linie zwischen dem Ankerpunkt (200) und der Rotorachse im Betriebszustand der Single-Point-Mooring-Windenergieanlage (100') identisch mit der Windrichtung ist.

4. Verfahren nach Anspruch 3, **dadurch gekennzeichnet, dass** die Windrichtung die zeitlich und/oder im Bereich der Single-Point-Mooring-Windenergieanlage (100') lokale mittlere Windrichtung ist.

5. Verfahren nach einem der Ansprüche 3 und 4, **dadurch gekennzeichnet, dass** das Trimmen mittels Füllen und/oder Entleeren von in oder an der Single-Point-Mooring-Windenergieanlage (100') vorgesehener Ballastwassertanks mit Ballastwasser erfolgt.

6. Verfahren nach einem der Ansprüche 3 bis 5, **dadurch gekennzeichnet, dass** das Trimmen mittels Anbringen und/oder Entfernen von Gewichten erfolgt.

## Claims

1. Single point mooring wind turbine (100') comprising a rotor (20) arranged on a tower (10), the wind turbine having a floating foundation (30) with at least two buoyancy bodies (40a, 40b, 40c) arranged in one plane,
**characterized by**
a design counteracting the swaying-at-anchor of the wind turbine (100) caused by the rotor torque, wherein:
- the tower (10) is inclined relative to the foundation (30) against the direction of rotation of the rotor (20); or
- the wind turbine (100') has, on the side opposite to the direction of rotation of the rotor (20), a weight (50) which at least partially compensates for the nominal torque of the rotor; or
- the buoyancy body (40b) arranged in the direction of rotation of the rotor (20) has a greater buoyancy than the buoyancy body (40a) arranged opposite the direction of rotation.

2. Wind turbine (100') according to claim 1, **characterized in that** the tower (10) is inclined at an angle of 2° ≤ β ≤ 7°.

3. Method for putting into operation a single-point mooring wind turbine (100') anchored to an anchor point (200) and freely rotatable thereabout, comprising a rotor (20) arranged on a tower (10), **characterized by** the step of:
- Trimming the turbine (100') in the non-operating state to compensate for the torque generated by the rotor (20) in operation in such a way that, in plan view of the single-point mooring wind turbine (100'), the imaginary line between the anchor point (200) and the rotor axis is identical to the wind direction in the operating state of the single-point mooring wind turbine (100').

4. Method according to claim 3, **characterized in that** the wind direction is the temporal and/or in the area of the single-point mooring wind turbine (100') local mean wind direction.

5. Method according to one of claims 3 and 4, **characterized in that** the trimming is performed by means of filling and/or emptying ballast water tanks provided in or on the single-point mooring wind turbine (100') with ballast water.

6. Method according to any one of claims 3 to 5, **characterized in that** the trimming is performed by means of attaching and/or removing weights.

## Revendications

1. Éolienne à système d'amarrage sur un point unique (100') comportant un rotor (20) disposé sur une tour (10), l'éolienne présentant une fondation (30) flottante comportant au moins deux flotteurs (40a, 40b, 40c) disposés dans un plan,
**caractérisée par**
une configuration s'opposant à la rotation de l'éolienne (100) induite par le couple de rotor, dans laquelle :
- la tour (10) est inclinée par rapport à la fondation (30) à l'opposé du sens de rotation du rotor (20) ; ou
- l'éolienne (100') présente, sur le côté opposé au sens de rotation du rotor (20), un poids (50) compensant au moins partiellement le couple nominal du rotor ; ou
- le flotteur (40b) disposé dans le sens de rotation du rotor (20) possède une flottabilité supérieure à celle du flotteur (40a) disposé à l'opposé du sens de rotation.

2. Éolienne (100') selon la revendication 1, **caractérisée en ce que** la tour (10) est inclinée à un angle de 2° ≤ β ≤ 7°.

3. Procédé de mise en service d'une éolienne (100') à système d'amarrage sur un point unique ancrée à un point d'ancrage (200) et pouvant tourner librement autour de celui-ci, comportant un rotor (20) disposé sur une tour (10), **caractérisé par** l'étape :
- d'équilibrage de l'éolienne (100') à l'état de repos pour la compensation du couple produit par le rotor (20) lors du fonctionnement, de telle sorte que, en vue de dessus de l'éolienne (100') à système d'amarrage sur un point unique, la ligne imaginaire entre le point d'ancrage (200) et l'axe de rotor à l'état de fonctionnement de l'éolienne (100') à système d'amarrage sur un point unique est identique à la direction du vent.

4. Procédé selon la revendication 3, **caractérisé en ce que** la direction du vent est la direction du vent moyenne locale dans le temps et/ou dans la zone de l'éolienne (100') à système d'amarrage sur un point unique.

5. Procédé selon l'une des revendications 3 et 4, **caractérisé en ce que** l'équilibrage est effectué au moyen du remplissage et/ou de la vidange de réservoirs d'eau de ballast prévus dans ou au niveau de l'éolienne (100') à système d'amarrage sur un point unique avec de l'eau de ballast.

6. Procédé selon l'une des revendications 3 à 5, **caractérisé en ce que** l'équilibrage est effectué par pose et/ou enlèvement de poids.
